## Europäisches Patentamt

(19) **European Patent Office**

**Office européen des brevets**

(11) Numéro de publication: **0 050 059**
**B1**

## FASCICULE DE BREVET EUROPEEN

(45) Date de publication du fascicule du brevet:
**12.09.84**

(51) Int. Cl.³: **G 02 F 1/29**, G 02 B 5/14

(21) Numéro de dépôt: **81401462.7**

(22) Date de dépôt: **18.09.81**

(54) Jonction optique hybride et application à un dispositif interférométrique en anneau.

(30) Priorité: **10.10.80 FR 8021677**

(43) Date de publication de la demande:
**21.04.82 Bulletin 82/16**

(45) Mention de la délivrance du brevet:
**12.09.84 Bulletin 84/37**

(84) Etats contractants désignés:
**DE GB IT NL SE**

(56) Documents cités:
**FR - A - 2 304 935**

**IEEE JOURNAL OF QUANTUM ELECTRONICS, vol. QE-13, no. 4, avril 1977 New York, US T.R. RANGANATH et al.: Ti-Diffused LiNbO3 Branched-Waveguide Modulators: Performance and Design", pages 290-295**
**IEEE JOURNAL OF QUANTUM ELECTRONICS, vol. QE-14, no. 7, juillet 1978 New York, US C.S. TSAI et al.: "Optical Channel Waveguide Switch and Coupler Using Total Internal Reflection", pages 513-517**

(73) Titulaire: **THOMSON-CSF, 173, Boulevard Haussmann, F-75379 Paris Cedex 08 (FR)**

(72) Inventeur: **Papuchon, Michel, THOMSON-CSF SCPI 173, bld Haussmann, F-75360 Paris Cedex 08 (FR)**
Inventeur: **Arditty, Hervé, THOMSON-CSF SCPI 173, bld Haussmann, F-75360 Paris Cedex 08 (FR)**
Inventeur: **Puech, Claude, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

## Description

L'invention se rapporte aux dispositifs optiques de transmission guidée, réalisables notamment en optique intégrée. On réalise un guide intégré en créant dans un substrat d'indice de réfraction $n_0$ une zone où l'indice de réfraction $n_1$ est supérieur à $n_0$. L'avantage des dispositifs optiques intégrés par rapport aux solutions de l'optique classique réside en ce qu'ils ne nécessitent aucun alignement, qu'il ne posent pas de problème de stabilité, qu'ils permettent un encombrement moindre, qu'ils suppriment les problèmes de vibration et enfin qu'ils donnent la possibilité d'atteindre les performances ultimes en permettant à la lumière d'être guidée tout le long de son parcours. Afin d'effectuer un guidage de rayonnements optiques dans plusieurs voies, il est intéressant de pouvoir commuter ces rayonnements d'un guide à l'autre.

Il est connu de réaliser des jonctions optiques hybrides selon le principe du coupleur directionnel. Il s'agit d'un commutateur comportant deux guides d'onde réalisés dans un matériau électro-optique et séparés par un milieu d'indice de réfraction inférieur à celui du matériau électro-optique, par une distance de l'ordre de quelques micromètres telle que le rayonnement soit transférable d'un guide à l'autre. L'indice de réfraction des deux guides est modifié en sens inverse par l'action d'un champ électrique, modifiant ainsi la longueur de couplage et donc la portion d'énergie lumineuse qui passe du premier guide au second. De telles structures doivent être géométriquement très précises; en effet, la longueur de couplage dépend de façon critique d'un grand nombre de paramètres; la distance inter-guide, en particulier, doit être réalisée de façon très précise.

Le dispositif de transmission guidée selon l'invention comprend deux branches de guides d'onde optiques monomodes convergents en un noeud d'où part une troisième branche de guide monomode. L'ensemble ayant donc la forme d'un Y. Les deux premières branches jouent le rôle d'entrées de la jonction optique hybride, la troisième branche joue le rôle de première sortie, la deuxième sortie étant une voie de transmission interne du milieu environnant. Cette jonction est donc une configuration de circuit optique intégré particulièrement simple. Elle trouve son utilisation notamment dans les interféromètres optiques. Ceux-ci, en effet, comportent un certain nombre de séparateurs de faisceaux qui peuvent être réalisés en utilisant cette jonction hybride. De plus ils peuvent comporter des modulateurs de phase qui peuvent alors être intégrés sur les mêmes circuits que lesdites jonctions.

L'objet de l'invention est donc un séparateur de rayonnement optique comportant au moins une jonction hybride intégrée à deux voies d'entrée et deux voies de sortie, cette jonction comprenant un assemblage en étoile de trois branches de guides d'onde optiques monomodes situées dans un milieu réfringent présentant un indice de réfraction inférieur à celui de ces branches; les extrémités de ces branches formant les deux entrées et la première sortie de la jonction, caractérisé en ce que la seconde voie de sortie est constituée par une portion du milieu réfringent reliant le noeud commun de ces branches à une facette de sortie.

D'autres particularités et avantages de l'invention apparaîtront à l'aide de la description ci-après, présentée à titre d'exemple non limitatif, et des dessins annexés où:

la figure 1 représente un mode de réalisation de l'invention;

les figures 2 et 3 représentent des variantes de réalisation de l'invention;

la figure 4 représente une application de l'invention à un interféromètre en anneau;

la figure 5 représente un interféromètre en anneau de l'art connu;

la figure 6 représente une application de l'invention dans un interféromètre en anneau.

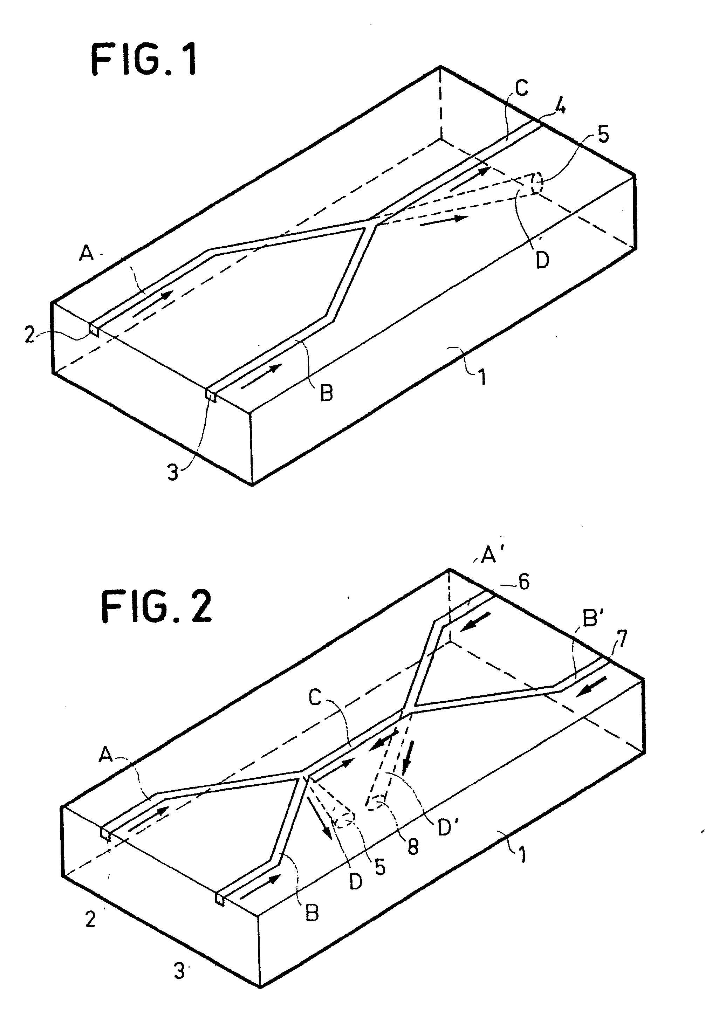

Le circuit optique intégré objet de la présente invention, est constitué d'une structure de guidage ne comportant que des guides monomodes. Il comprend comme cela est illustré sur la fig. 1 un embranchement en forme d'Y. Ce circuit est réalisé à partir d'un substrat qui peut être un substrat électrooptique tel une plaquette de Niobate de Lithium ($LiNbO_3$) ou de Tantalate de Lithium ($LiTaO_3$). Dans ce cas, des électrodes sont déposées de part et d'autre des guides d'ondes pour permettre une modulation des si-gnaux lumineux. Les guides de lumière peuvent être obtenus sur de tels substrats par diffusion d'ions métalliques (respectivement Titane et Niobium): ce qui permet d'augmenter l'indice de réfraction de la zone où s'effectue cette diffusion, donc de former le guide. La fabrication de l'ensemble utilise des techniques de masquage analogues à celles utilisées pour la fabrication de semi-conducteurs. Les liaisons optiques sont réalisées par deux guides provenant de deux points entrées 2 et 3, confluant en un noeud pour émerger dans un guide qui est relié au point de sortie 4.

Le fonctionnement du dispositif est particulièrement clair, si l'on prend en considération la connaissance que l'on a de la propagation dans un embranchement constitué de guides monomodes. L'embranchement se comporte comme un séparateur tel qu'une lame semi-transparente avec deux entrées et deux sorties. Si pour la lame semi-transparente ces quatre voies sont évidentes, il faut se reporter au schéma de la fig. 1 pour voir qu'il existe également quatre voies pour l'embranchement considéré. En effet, outre les trois voies évidentes représentées par les guides monomodes A, B et C, il existe une quatrième voie D correspondant à une onde qui fuit dans le substrat. De plus ce séparateur peut être considéré comme une jonction hybride; en effet si les ondes qui se propagent dans A et B arrivent en phase au niveau de l'embranchement, elles excitent le mode du guide C et toute l'énergie est transférée dans ce guide. Si, par contre, elles sont en opposition de phase, tout se passe comme si on cherchait à exciter un mode antisymétrique dans le guide C (mode d'ordre supérieur) qui est à la coupure dans le guide monomode. L'énergie correspondante fuit donc dans le substrat suivant la voie D. Ce phénomène est connu de IEEE JOURNAL OF QUANTUM ELECTRONICS, vol. QE-13, no. 4, avril 1977 New York, US, pages 290-295 T.R. RANGANATH et al.: «Ti-Diffused $LiNbO_3$ Branched-

Waveguide Modulators : Performance and Design», qui ne suggère pas l'utilisation de cette quatrième voie comme seconde voie de sortie de la jonction hybride. Lorsque le déphasage entre les deux ondes parcourant les guides A et B est quelconque, une partie de l'énergie est couplée dans le guide C, la partie complémentaire fuit dans le substrat suivant la voie D. Les extrémités libres des différents chemins optiques A, B, C, D constituent donc les deux points d'entrée 2 et 3 et les deux points de sortie 4 et 5 de la jonction.

Si nous associons tête-bêche deux séparateurs optiques de type décrit sur la fig. 1, nous obtenons un ensemble tel que illustré sur la fig. 2. Les deux séparateurs sont intégrés à l'intérieur d'un même substrat 1. Ce dispositif est symétrique en entrées-sorties (2-3, 6-7). Si nous considérons des ondes entrant et se propageant dans les guides A et B, si elles sont en phase tout l'énergie va être propagée dans le guide C. Quand la lumière guidée dans ce guide monomode C parvient à l'embranchement, une partie est couplée dans le guide A' et l'autre dans le guide B'. La séparation énergétique entre les deux guides A' et B' peut être réglée une fois pour toute par masquage. Si l'embranchement est parfaitement symétrique cette séparation est de 50% - 50%, et les pertes sont minimales si l'angle d'embranchement est faible. Pour obtenir une répartition différente de 50% - 50%, il suffira de rendre l'embranchement dissymétrique. Lorsque les ondes se propageant en A et B sont en opposition de phase, il n'y a alors plus de transmission dans le guide central C, mais transmission à l'intérieur du substrat selon D.

Ce fonctionnement qui vient d'être décrit est tout aussi vrai dans l'autre sens, c'est-à-dire lorsque les guides d'entrées sont les guides A' et B'.

En effectuant un dépot de métallisation à la surface du substrat, le guide d'onde central C joue alors le rôle d'un polariseur ne laissant passer que des ondes d'un seul mode optique, en tenant compte de la polarisation.

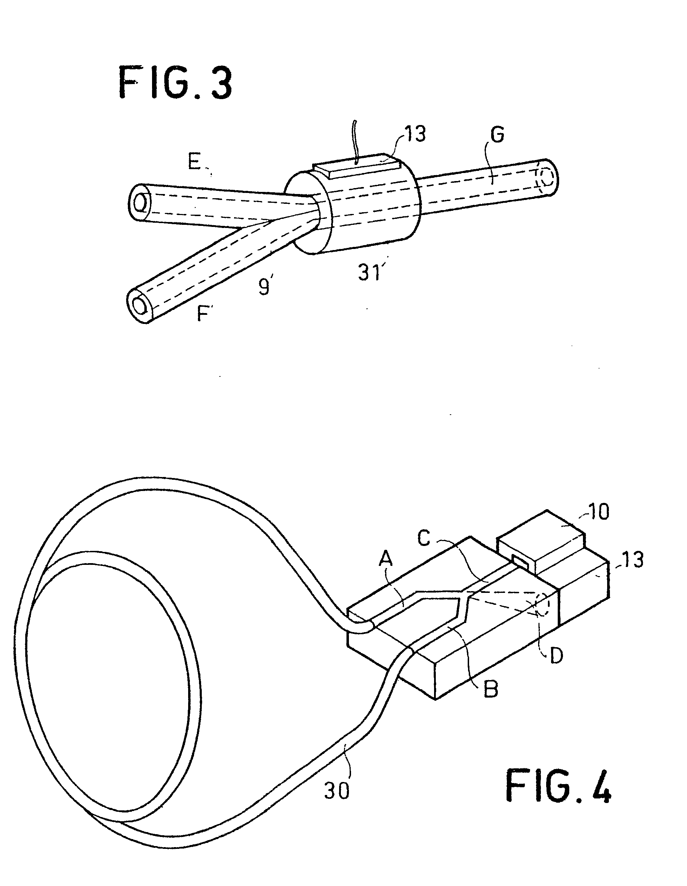

Le séparateur de la fig. 1 décrit précédemment peut être réalisé d'une façon particulièrement intéressante en utilisant le montage de la fig. 3. Trois fibres optiques monomodes E, F et G qui jouent alors le rôle des guides A, B et C de la fig. 1 sont couplées entre elles pour former un Y. Le couplage entre ces fibres peut notamment être réalisé par rodage des extrémités de celle-ci de telle façon qu'il y ait continuité entre le coeur de ces fibres pour former ce Y. La quatrième voie D est alors obtenue par couplage d'un milieu 31 avec la gaine 9 de la fibre optique. En effet c'est à l'intérieur de cette gaine que s'effectue la transmission correspondante. L'indice du milieu 31 qui forme ici un manchon doit alors être supérieur à celui de la gaine 9. Un détecteur 13 permet de capter le signal véhiculé par la voie D.

Il est de même possible de réaliser de la même façon le dispositif illustré à la fig. 2 en couplant tête-bêche deux séparateurs illustrés à la fig. 3. En considérant des fibres de forme elliptique, ces fibres jouent le rôle d'un polariseur.

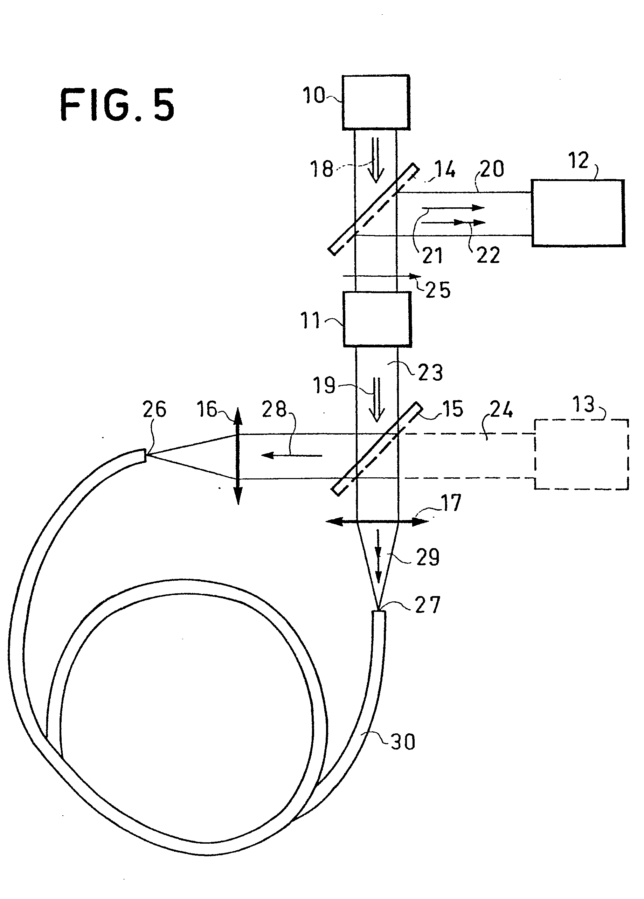

La fig. 5 montre un schéma de principe d'un interféromètre en anneau selon l'art connu. Son trajet optique est réalisé en fibre optique monomode, mais le coeur de cet interféromètre est constitué d'éléments optiques traditionnels.

L'entrée de l'anneau est matérialisée par la lame semi-transparente 15. Le faisceau incident cohérent 19 provenant de la source 10 arrive sur la lame semi-transparente 15. Il a préalablement traversé la lame semi-transparente 14 et le filtre de mode 11. La lame semi-conductrice 15 réfléchit une partie du faisceau incident 19 dans l'extrémité 26 d'une fibre optique 30 après focalisation par une lentille 16. Elle transmet l'autre partie dans l'autre extrémité 27 de la fibre 30, après focalisation par une lentille 17.

Le premier faisceau 28 parcourt l'anneau de l'interféromètre dans un sens, tandis que l'autre faisceau 29 le parcourt en sens inverse. Ces deux faisceaux arrivent alors sur la lame semi-transparente 15.

Le premier faisceau 28 est transmis dans le bras 23 de l'interféromètre, est réfléchi en partie dans le bras 24. Il en est de même pour le deuxième faisceau. Deux portions de ces deux faisceaux interfèrent donc dans le bras 23 et 24.

En l'absence de parturbations non réciproques dans le bras, l'interférence est destructrice et le signal détecté par le détecteur 13 est nul, tandis que dans le bras 23 l'interférence est constructive et le signal est maximal.

Le fait d'intercaler un filtre de mode 11 dans le bras d'entrée 23 a pour effet de rendre l'interféromètre strictement réciproque; il est parcouru par une onde contenue dans un seul mode optique.

Après parcours de la boucle optique de l'interféromètre et recombinaison par la lame séparatrice, la fraction d'énergie optique obtenue par interférence des deux ondes dans le bras 23 de l'interféromètre, présente une structure de mode complexe. En général, la projection de cette énergie sur le mode propre du filtre 11, est non nulle. Cette fraction est atténuée mais contenue dans ce même mode unique et bien défini. En l'absence de phénomènes non linéaires, et, bien sûr en l'absence de phénomènes non réciproques proprement dits, la fraction d'énergie contenue, à l'aller comme au retour dans ce même mode est linéairement indépendante du reste d'énergie optique : tout se passe comme si ce reste d'énergie n'existait pas, et les conditions d'unicité de mode nécessaires et suffisantes à une réciprocité rigoureuse du dispositif sont suffisantes.

En fait, pour la plupart des filtres de mode que l'on peut réaliser, la polarisation de l'onde traversant le filtre est un degré de liberté supplémentaire, c'est à dire que, en fait, le filtre est bimode.

Lorsque les constantes de propagation, les distributions d'intensité ou les pertes de ces deux modes diffèrent franchement, cela suffit à les séparer. Sinon l'un des deux modes doit être rejeté par un polariseur.

Ainsi les deux faisceaux après avoir parcouru la fibre en sens inverses sont repris par le bras 23 de l'interféromètre par la lame semi-transparente 15. Ils retraversent le filtre de mode et le polariseur 25, et sont séparés du faisceau incident 19 par la lame semi-transparente 14 qui les envoie en partie dans le bras 20 dans lequel on détecte le signal d'interférence, sur le détecteur 12.

Il y a donc deux positions possibles pour le détecteur en 13 ou en 12.

Si l'on considère un interféromètre simplifié en prenant compte le bras de sortie 24 et le détecteur 13, on peut remplacer le séparateur 15 ici constitué d'une lame semi-transparente par le séparateur illustré à la fig. 1. On obtient alors le dispositif illustré à la fig. 4. Les jonctions étant réalisées de façon directe, les lentilles n'ont alors plus de raison d'être. Le détecteur 13 est positionné contre l'une des facettes du circuits intégré pour recevoir le signal véhiculé par la voie D, interne au milieu.

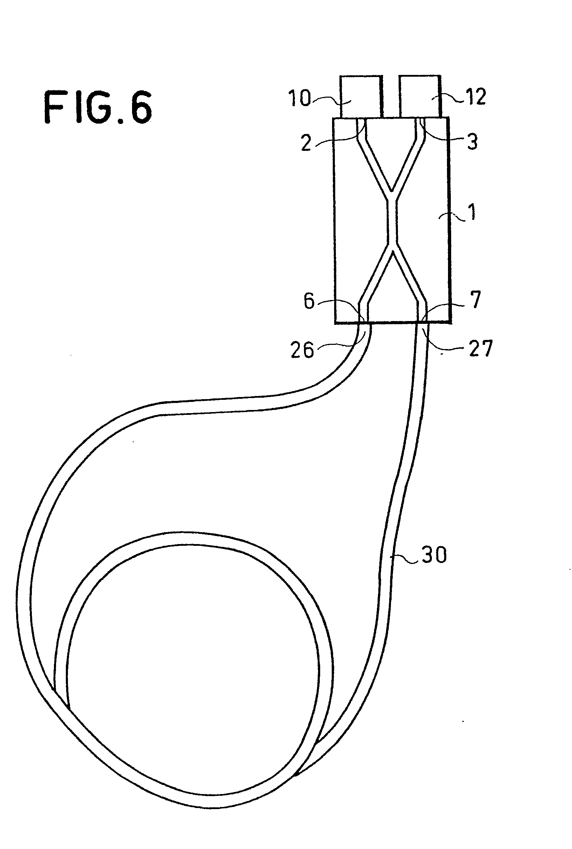

Par contre, si l'on considère l'interféromètre en sa totalité, on peut remplacer l'ensemble des éléments optiques traditionnels de la fig. 5 par le dispositif optique intégré de la fig. 2. On obtient, alors l'interféromètre optique de la fig. 6 qui fonctionne suivant le principe décrit précédemment.

Les jonctions optiques intégrées jouent le rôle de séparateurs de faisceau, rôle tenu auparavant par les lames semi-transparentes. Les liaisons fibre optique — guide étant directes, les lentilles sont devenues inutiles. Les guides d'ondes étant monomodes jouent donc le rôle de filtres de mode. En déposant une métallisation à la surface du substrat, le guide d'onde central joue aussi le rôle de polariseur et nous retrouvons alors intégralement le schéma de la fig. 5.

Si le matériau dans lequel est réalisé la structure de guidage le permet, s'il s'agit par exemple d'un matériau électrooptique, on peut réaliser sur le même substrat des éléments actifs et passifs. Il est alors possible de compléter la structure de base qui est passive en lui ajoutant des éléments actifs, tels que des déphaseurs qui peuvent faciliter le traitement du signal.

Les guides d'onde peuvent par exemple être réalisés dans un substrat de Niobate de Lithium par des techniques connues de diffusion de Titane. Leur largeur est choisie de manière à ce qu'ils soient monomodes à la longueur d'onde utrilisée (typiquement 3 $\mu$m à $\lambda$ = 0,85 $\mu$m: laser GaAs). On peut considérer par exemple l'axe du cristal dans le plan de la surface où sont réalisés les guides, mais d'autres orientations sont possibles; une configuration très employée utilise un cristal avec l'axe perpendiculaire à la surface.

Le guide central peut avoir une longueur de quelques millimètres à plusieurs centimètres (typiquement 5 mm). L'angle total des embranchements, entre les guides A et B de la fig. 1 peut être de l'ordre de 1°.

Pour des raisons de commodité de couplage du circuit avec la fibre optique monomode, d'une part, et avec la source laser et le détecteur, d'autre part, l'espacement des guides sur les faces d'entrée et de sortie du circuit optique intégré est de l'ordre de 500 micromètres. La longueur des guides de sortie peut être égale à 5 millimètres pour permettre éventuellement la réalisation de modulateurs de phase intégrés en utilisant l'effet électro-optique dans le substrat de Niobate de Lithium, par application d'une différence de potentiel appropriée entre deux électrodes situées de part et d'autre du guide d'onde.

## Revendications

1. Séparateur de rayonnement otique comportant au moins une jonction hybride intégrée à deux voies (A, B) d'entrée et deux voies de sortie (C, D), cette jonction comprenant un assemblage en étoile de trois branches de guides d'one otiques monomodes situées dans un milieu réfringent (1) présentant un indice de réfraction inférieur à celui de ces branches, les extrémités de ces branches formant les deux entrées (2, 3) et la première sortie de la jonction (4), caractérisé em ce que la seconde voie de sortie (5) est constituée par une portion du milieu réfringent (1) reliant le noeud commun de ces branches à une facette de sortie.

2. Séparateur selon la revendication 1, caractérisé en ce qu'il comprend deux jonctions hybrides, les deux premières sorties de chaque jonction étant reliées entre elles par un guide monomode (C), ce guide reliant donc les deux noeuds d'où partent les différentes branches de chaque jonction.

3. Séparateur selon la revendication 1, caractérisé en ce que le milieu réfringent (1) est un matériau ferro-électrique.

4. Séparateur selon la revendication 3, caractérisé en ce que le matériau ferro-électrique est du Niobate de Lithium, du Titane étant diffusé dans ce Niobate pour constituer les guides.

5. Séparateur selon l'une quelconque des revendications précédentes, caractérisé en ce que des électrodes sont disposées de part et d'autre des guides d'ondes pour permettre une modulation des signaux lumineux.

6. Séparateur selon l'une quelconque des revendications précédentes, caractérisé en ce qu'une métallisation est déposée à la surface du milieu réfringent (1).

7. Séparateur selon l'une quelconque des revendications 1 à 6, caractérisé en ce que le milieu réfringent (1) est constitué par la gaine de fibres optiques monomodes dont le coeur forme les branches.

8. Séparateur selon la revendication 7, caractérisé en ce que les fibres monomodes sont de forme elliptique.

9. Utilisation d'un séparateur selon la revendication 2 dans un dispositif interférométrique en anneau comportant un guide d'onde en fibre optique parcouru en sens contraires par deux fractions d'un rayonnement optique issues d'une source cohérente et transmises à un détecteur sensible à leurs interférences après parcours de cette fibre optique, caractérisée en ce que les deux extrémités de cette fibre optique, cette source et ce détecteur sont directement reliés, respectivement, aux quatre branches de ce séparateur.

## Patentansprüche

1. Separator zur Trennung von optischer Strahlung, mit wenigstens einer integrierten Hybrid-Verbindungsstelle, die zwei Eingangswege (A, B) und zwei Ausgangswege (C, D) aufweist und eine sternförmige Aneinanderfügung von drei optischen Monomod-Wellenleiterzweigen umfasst, die in einem lichtbrechenden Medium (1) liegen, dessen Brechungsindex kleiner ist als der dieser Zweige; wobei die Enden dieser Zweige die beiden Eingänge (2, 3) und den ersten Ausgang (4) der Verbindungsstelle bilden, dadurch gekennzeichnet, dass der zweite Ausgangsweg (5) durch einen Teil des lichtbrechenden Mediums (1) gebildet ist, welcher den gemeinsamen Knotenpunkt dieser Zweige mit einer Austrittsfacette verbindet.

2. Separator nach Anspruch 1, dadurch gekennzeichnet, dass er zwei Hybrid-Verbindungsstellen umfasst, wobei die zwei ersten Ausgänge jeder Verbindungsstelle miteinander durch einen Monomod-Leiter (C) verbunden sind, von dessen zwei Knotenpunkten ausgehend sich die verschiedenen Zweige jeder Verbindungsstelle erstrecken.

3. Separator nach Anspruch 1, dadurch gekennzeichnet, dass das lichtbrechende Medium (1) ein ferroelektrisches Material ist.

4. Separator nach Anspruch 3, dadurch gekennzeichnet, dass das ferroelektrische Material Lithiumniobat ist, wobei Titan in dieses Niobat eindiffundiert ist, um die Leiter zu bilden.

5. Separator nach einem der vorstehenden Ansprüche, dadurch gekennzeichnet, dass Elektroden auf beiden Seiten der Wellenleiter angeordnet sind, um eine Modulation der Lichtsignale zu ermöglichen.

6. Separator nach einem der vorstehenden Ansprüche, dadurch gekennzeichnet, dass eine Metallisierung auf der Oberfläche des lichtbrechenden Mediums (1) aufgebracht ist.

7. Separator nach einem der Ansprüche 1 bis 6, dadurch gekennzeichnet, dass das lichtbrechende Medium (1) durch die Hülle von optischen Monomod-Fasern gebildet ist, deren Kern die Zweige bildet.

8. Separator nach Anspruch 7, dadurch gekennzeichnet, dass die Monomod-Fasern elliptische Form haben.

9. Verwendung eines Separators nach Anspruch 2 in einer ringartigen Interferrometervorrichtung, die einen Wellenleiter aus einer optischen Faser umfasst, welche in entgegengesetzten Richtungen von zwei Bruchteilen einer optischen Strahlung durchlaufen wird, die von einer kohärenten Quelle abgegeben und zu einem Detektor übertragen werden, der auf ihre Interferenzen nach Durchlaufen dieser optischen Faser anspricht, dadurch gekennzeichnet, dass die beiden Enden dieser optischen Faser, diese Quelle und dieser Detektor direkt jeweils mit einem der vier Zweige dieses Separators verbunden sind.

**Claims**

1. Separator of optical radiation comprising at least one integrated hybride junction having two input paths (A, B) and two output paths (C, D), this junction comprising a star-shaped assembly of three branches of optical monomode waveguides disposed within a refringent medium (1) having an index of refraction smaller than that of these branches; the ends of these branches forming the two inputs (2, 3) and the first output of the junction (4), characterized in that the second output path (2) is formed of a portion of the refringent medium (1) connecting the common knot of these branches to an output facet.

2. Separator according to claim 1, characterized in that it comprises two hybride junctions, the two first outputs of each junction being interconnected by a monomode guide (C), this guide having two knots from which the different branches of each junction extend.

3. Separator according to claim 1, characterized in that the refringent medium (1) is a ferroelectric material.

4. Separator according to claim 3, characterized in that the ferroelectric material is lithium niobate, titanium being diffused into the niobate to form the guides.

5. Separator according to any of the preceding claims, characterized in that the electrodes are deposited on both sides of the waveguides to permit a modulation of the luminous signals.

6. Separator according to any of the preceding claims, characterized in that a metallization is deposited on the surface of the refringent medium (1).

7. Separator according to any of the claims 1 to 6, characterized in that the refringent medium (1) is formed of the envelope of optical monomode fibers the core of which forms the branches.

8. Separator according to claim 7, characterized in that the monomode fibers are of elliptic shape.

9. Use of a separator according to claim 2 in an annular interferometer device comprising a waveguide formed of an optical fiber through which two fractions of an optical radiation issued by a coherent source travel in opposite senses and are transmitted to a detector responding to the interferences therebetween after crossing this optical fiber, characterized in that the two ends of this optical fiber, this source and this detector are respectively directly connected to the four branches of this separator.

FIG.1

FIG.2

# FIG.3

# FIG.4

# FIG. 5

FIG.6